# FASCICULE DE BREVET EUROPEEN

(11) **EP 4 504 663 B1**
(45) Date de publication et mention de la délivrance du brevet: **03.06.2026**
(21) Numéro de dépôt: 23719828.8
(22) Date de dépôt: 04.04.2023
(51) Int. Cl.: C02F 1/00, B01J 29/03, B01J 37/02, B01J 23/745, B01J 20/28, B01D 15/38, B01J 20/32

(54) **MATÉRIAUX MÉSOPOREUX MAGNÉTIQUES À BASE DE SILICE (MPMS)**
MAGNETISCHE MESOPORÖSE MATERIALIEN AUF SILICIUMDIOXIDBASIS (MMS)
MAGNETIC MESOPOROUS SILICA-BASED (MMS) MATERIALS

(30) Priorité: 07.04.2022 FR 2203185
(43) Date de publication de la demande: 12.02.2025
(73) Titulaire: Université Bourgogne Europe, 21000 Dijon (FR); Centre National de la Recherche Scientifique, 75016 Paris (FR)
(72) Inventeur: BOUYER, Frédéric, 21160 Perrigny-lès-Dijon (FR); CHAABANE, Laroussi, 21000 Dijon (FR)
(74) Mandataire: Bandpay & Greuter
(86) Numéro de dépôt international: PCT/FR2023/050476
(87) Numéro de publication internationale: WO 2023/194681

(56) Documents cités:
- WO-A2-2009/151490
- NIKNAM KHODABAKHSH ET AL: "Recent advances in preparation and application of sulfonic acid derivatives bonded to inorganic supports", IRANIAN CHEMICAL SOCIETY. JOURNAL, IRANIAN CHEMICAL SOCIETY, IR, vol. 17, no. 12, 15 July 2020 (2020-07-15), pages 3095 - 3178, XP037278894, ISSN: 1735-207X, [retrieved on 20200715], DOI: 10.1007/S13738-020-01997-W

## Description

### Domaine de l'invention

La présente invention concerne un procédé de préparation de Matériaux MésoPoreux Magnétiques à base de Silice (MPMS), les Matériaux MésoPoreux Magnétiques à base de Silice (MPMS) susceptibles d'être obtenus par ce procédé et leur utilisation pour dépolluer l'eau, notamment dégrader les polluants aromatiques tels que les perturbateurs endocriniens ou les substances pharmaceutiques.

### Arrière-plan technique

La présence de composants indésirables dans l'eau peut avoir des effets néfastes sur les organismes vivants à la suite d'une exposition directe ou indirecte de ces organismes à ces substances. Parmi ces composants, on retrouve les micropolluants issus notamment de l'industrie agro-alimentaire, pharmaceutique, pétrolière tels que les pesticides, hydrocarbures, solvants, détergents, cosmétiques, substances médicamenteuses. Une contamination des eaux usées provient également des effluents hospitaliers.

Le bisphénol A (BPA) fait partie de ces substances chimiques qui sont périodiquement déchargées dans les eaux usées. Ce produit est un précurseur industriel primaire dans la fabrication de polycarbonates et de résines époxy. Ce composé est déchargé dans l'environnement (eau, sol et air) par différentes voies lors des processus de fabrication (en particulier pendant le chauffage, la manipulation et le transport des produits). Il fait partie des substances reconnues depuis une dizaine d'années en tant que perturbateur endocrinien par l'ANSES. C'est la raison pour laquelle l'utilisation de cette substance est de plus en plus contrainte.

Plusieurs types de traitements (physique, chimique ou biologique) sont généralement employés pour dégrader le BPA présent dans les eaux usées, notamment la dégradation par des procédés d'oxydation avancés (POA). Ces méthodes sont plus efficaces que les procédés physicochimiques usuels dans la mesure où elles permettent de générer la formation de radicaux libres hautement réactifs, tels que·•OH, •O₂,·•O₂H, capables de dégrader le BPA.

Toutefois, ces POA requièrent généralement la présence de réactifs chimiques, telles que d'oxydants chimiques (par exemple O₃, K₂Cr₂O₁), et/ou de catalyseurs (par exemple TiO₂ etc.,), qui augmente le coût du procédé de dépollution et induit une pollution secondaire, celle-ci renchérissant d'autant le coût de dégradation du BPA.

Il existe donc un réel besoin de disposer d'un procédé permettant de dépolluer l'eau, notamment de dégrader le BPA, de façon efficace, à moindre coût, et notamment sans induire une pollution secondaire.

WO2009/151490 A2 décrit un matériau magnétique à base de silice et son procédé de préparation selon l'état de la technique.

### Résumé de l'invention

Il a maintenant été découvert des matériaux MésoPoreux Magnétiques à base de Silice (MPMS) particulièrement utiles pour la dépollution de l'eau et permettant notamment de pallier aux inconvénients ci-dessus. Plus particulièrement, les inventeurs ont pu montrer que ces matériaux permettaient, à partir de peroxyde d'hydrogène (H₂O₂), de générer des radicaux hydroxyles hautement réactifs, capables de dégrader efficacement le BPA et/ou d'autres polluants aromatiques, notamment de les transformer en substances biodégradables.

Par ailleurs, ces matériaux catalytiques, principalement à base de silice, sont avantageusement peu coûteux à fabriquer.

Selon un autre avantage, ces matériaux MPMS peuvent être facilement récupérés et être réutilisés plusieurs fois, dans plusieurs cycles de dépollution. En outre, hormis l'eau oxygénée, non polluante, leur mise en œuvre ne requière la présence d'aucun réactif chimique et ne génère donc pas de pollution secondaire. Ils permettent donc d'accéder à des procédés de dépollution peu coûteux et respectueux de l'environnement.

Ainsi, selon un premier aspect, l'invention concerne un procédé de préparation d'un matériau mésoporeux magnétique à base de silice (MPMS), ledit procédé comprenant les étapes de :
i) Fonctionnalisation des groupes silanols (-SiOH) d'un matériau mésoporeux à base de silice par greffage covalent d'un ligand (L) comprenant, à au moins l'une extrémité, un groupe zwitterionique de formule (I), notamment susceptible de complexer des particules superparamagnétiques : 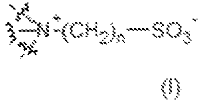 où n est un entier égal à 3 ou 4 ;
ii) Incorporation de particules de ferrites superparamagnétiques (MFe₂O₄NP) au sein du matériau mésoporeux, ce par quoi on obtient un matériau mésoporeux magnétique à base de silice (MPMS).

Selon des modes de réalisation, le procédé comprend en outre une ou plusieurs des caractéristiques suivant :
- le matériau mésoporeux est matériau de type SBA-15 ou SBA-16, de préférence de type SBA-15 ;
- le ligand (L) comprend un groupe zwitterionique de formule (la) ou (Ib) :

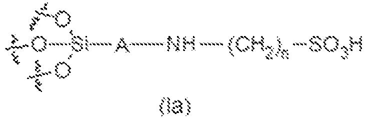

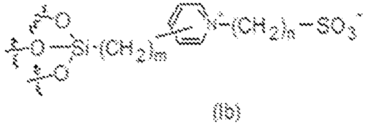

Dans lesquelles :
m est un entier égal à 0, 1 ou 2, et
A désigne un groupe alkylène en C₃ ou aminoalkylène (-NH-Alk-) en C₅ ou C₆ ;
   - l'étape i) comprend les étapes suivantes :
      i₁) réaction des fonctions silanols du matériau mésoporeux avec un composé de formule (IIa) ou (IIb) : et 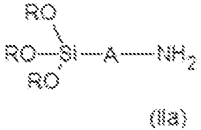 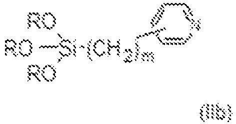 Dans lesquelles :
         R représente, indépendamment, à chaque occurrence, un groupe méthyle ou éthyle ;
         m étant égal à 0, 1 ou 2 ;
      i₂) réaction de la fonction amine ou pyridine du composé (IIa) ou (IIb) avec un composé sultone, en particulier la 1,3-propanesultone (PS) ou la 1,4-butanesultone ;
   - à l'étape ii) les particules de ferrites superparamagnétique (MFe₂O₄NP) sont préparées *in situ,* au sein du matériau mésoporeux fonctionnalisé, à partir d'ions M²⁺, M²⁺ étant de préférence un cation métallique, notamment Fe²⁺, Co²⁺, Ni²⁺, Mn²⁺, Cu²⁺, Zn²⁺, et Fe³⁺;
   - les ferrites (MFe₂O₄NP) sont préparées par réaction d'ions M²⁺ et Fe³⁺ en présence d'ammoniaque, de préférence à une température de 90 °C ;
   - les particules de ferrite superparamagnétiques ont une taille comprise entre 5 nm et 10 nm.

Selon un deuxième aspect, l'invention concerne un matériau à base de silice magnétique mésoporeuse (MPMS) susceptible d'être obtenu selon le procédé tel que défini ci-dessus.

Selon un troisième aspect, l'invention concerne un matériau à base de silice magnétique mésoporeuse (MPMS), caractérisé en qu'il comprend :
- au moins un ligand (L) comprenant un groupe zwitterionique de formule (I) telle que définie ci-dessus, ledit ligand (L) étant greffé de manière covalente sur des groupes silanols d'un matériau mésoporeux à base de silice ; et
- au moins une nanoparticule de ferrite superparamagnétique (MFe₂O₄NPs).

Selon un quatrième aspect, l'invention concerne l'utilisation d'un matériau mésoporeux magnétique à base de silice (MPMS) pour la dépollution de l'eau, notamment pour dégrader des composés organiques aromatiques tels que les perturbateurs endocriniens ou des composés pharmaceutiques.

Selon des modes de réalisation, le matériau est utilisé en présence d'H₂O₂ et d'une agitation notamment par ultrasons, de préférence à haute fréquence.

D'autres caractéristiques, aspects, objets et avantages de la présente invention apparaîtront encore plus clairement à la lecture de la description qui suit.

Il est par ailleurs précisé que les expressions "compris entre... et..." et "de... à..." utilisées dans la présente description doivent s'entendre comme incluant chacune des bornes mentionnées.

### Brève description des figures

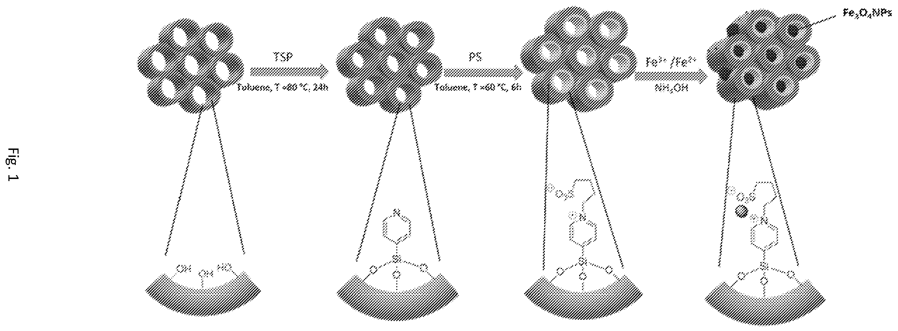

La figure 1 est un schéma illustrant la synthèse du matériau mésoporeux magnétique à base de silice (MPMS) selon l'invention.

### Description détaillée

L'invention est maintenant décrite plus en détail et de façon non limitative dans la description qui suit.

Par « matériau mésoporeux à base de silice », ou « silice mésoporeuse organisée » (« SMO ») ou encore « structure mésoporeuse organisée », on entend une structure constituée d'une charpente en silice amorphe délimitant des canaux et/ou des cavités bien ordonnés et de tailles régulières. Elles se caractérisent par une taille de pore de 2 à 50 nm, ainsi qu'une surface spécifique élevée, parfois supérieure à 1000 m².g⁻¹. Les silices mésoporeuses organisées sont souvent synthétisées selon le mécanisme d'auto-assemblage coopératif ou CTM (Cooperative Templating Mechanism), dont le principe consiste à faire hydrolyser puis condenser un précurseur inorganique (silane) autour de micelles de tensioactifs en solution aqueuse. Selon la nature du tensioactif utilisé (ionique ou non ionique) et du milieu réactionnel (acide ou basique) dans lequel la synthèse a lieu, différentes familles de matériaux (M41S, SBA-n, HMS, MSU...) peuvent être obtenues.

Les matériaux mésoporeux à base de silice mis en œuvre dans le procédé selon l'invention appartiennent de préférence à la famille SBA-n (D. Zhao, J. Feng, Q. Huo, N. Melosh, G. H. Fredrickson, B. F. Chmelka, G.D. Stucky. Science. 1998, 279, 548) et tout particulièrement à la SMO de type SBA-15 ou SBA-16. Cette famille présente des pores plus larges et des parois plus épaisses qui lui confèrent une stabilité hydrothermale plus importante que la famille des M41S généralement utilisée.

Par « matériau mésoporeux », on entend un matériau incluant des pores de diamètre compris entre 2 nm et 50 nm, notamment entre 2 et 30 nm.

Par « alkyle », ou Alk, on entend un groupe hydrocarboné saturé, linéaire ou ramifié, de formule CₙH₂ₙ₊₁, où n représente le nombre d'atomes de carbone.

Par « alkylène », on comprend un groupement alkyle divalent, -Alk- tel que le méthylène (-CH₂-).

### [Procédé de préparation d'un matériau (MPMS)]

Selon un premier aspect, l'invention concerne un procédé de préparation d'un matériau mésoporeux magnétique à base de silice (MPMS), ledit procédé comprenant les étapes de :
i) Fonctionnalisation des groupes silanols (-SiOH) d'un matériau mésoporeux à base de silice par greffage covalent d'un ligand (L) comprenant, à au moins une extrémité, un groupe zwitterionique de formule (I), notamment susceptible de complexer des particules superparamagnétiques : 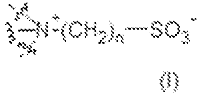 où n est un entier égal à 3 ou 4 ;
ii) Incorporation de nanoparticules de ferrites superparamagnétiques (MFe₂O₄NP), où M peut être un métal notamment Mn, Fe, Co, Ni, Cu, Zn, au sein du matériau mésoporeux, ce par quoi on obtient un matériau mésoporeux magnétique à base de silice (MPMS).

### Etape i)

Le matériau mésoporeux à base de silice mis en œuvre à l'étape i) est de préférence un matériau de type SBA-15 ou SBA-16, plus préférentiellement de type SBA-15.

Ce matériau peut être préparé selon un procédé comprenant les étapes de :
a) Hydrolyse et précondensation, en milieu acide, d'un précurseur de silice (SiO₂) en présence d'un composé porogène de formule (POE)ₙ-(POP)ₘ-(POE)ₙ dans laquelle :
   POE est un bloc polyoxyéthylène,
   POP est un bloc polyoxypropylène,
   n est égal à 20 ou 106 et
   m est égal à 70 ;
b) Elimination de l'agent porogène de la structure condensée obtenue à l'étape a) ce par quoi on obtient un matériau mésoporeux organisé à base de silice (MPS).

L'agent porogène mis en œuvre à l'étape a) est soit le copolymère tribloc Pluronic^{®} P123 de formule POE₂₀POP₇₀POE₂₀ soit le Pluronic^{®} F127 (également dénommé Poloxamer 407) de formule POE₁₀₆POP₇₀POE₁₀₆.

En particulier, comme rapporté dans la littérature, le Pluronic^{®} P123 de formule permet la synthèse de Structures Mésoporeuses organisées (SMO) de type SBA-15 de structure 2D-hexagonale (P6mm) alors que le Pluronic^{®} F127 permet d'accéder à des structures SMO de type SBA-16 de structure 3D-cubique (Im3m).

Les SMO de type SBA-15 rapportées dans la littérature possèdent généralement de larges pores allant de 50 à 300 Å, parfaitement calibrés, et modulés en jouant sur la présence d'expanseurs de pores, les conditions de synthèse, une surface spécifique pouvant atteindre jusqu'à 1000 m²/g et des parois épaisses (plusieurs nanomètres) ce qui confère au matériau une bonne stabilité hydrothermale.

Les SMO de type SBA-16 rapportées dans la littérature possèdent des propriétés volumétriques similaires à celles des SBA-15.

L'étape a) d'hydrolyse et de précondensation comprend les étapes de :
a₁) dispersion de l'agent porogène en milieu acide, en particulier à une température comprise entre 30 et 50°C ;
a₂) addition, dispersion et précondensation du précurseur de silice dans le mélange obtenu à l'étape a₁), notamment à une température comprise entre 90°C et 150°C.

L'étape a₁) est notamment réalisée à un pH acide. La concentration d'acide fort peut être comprise entre 1 mol/L et 2 mol/L, notamment aux alentours de 1,6 mol/L.

L'acide mis en œuvre à l'étape a₁) est notamment un acide minéral, tel que l'acide chlorhydrique.

Selon des modes de réalisation, la concentration molaire de l'agent porogène dans l'eau est comprise entre 3 mmol/L et 8 mmol/L, notamment entre 4,5 mmol/L et 6 mmol/L.

L'étape a₁) a pour but de solubiliser l'agent porogène dans la solution aqueuse. Cette étape est typiquement réalisée sous agitation et/ou pendant une durée tᵢ₁ comprise entre 1 et 3 heures.

L'étape a₂) comprend l'addition du précurseur de silice à la solution d'agent porogène obtenue à l'étape a₁). Cette addition se fait généralement sous agitation.

Le précurseur de silice peut être un composé comprenant au moins un groupe alkoxysilane, de préférence un composé Si(OR)₄, avec R, identique ou différent, représentant un groupe alkyle en C₁-C₄. Comme exemple de précurseur de silice, on peut citer le tétraéthylorthosilicate (TEOS), le tétraméthoxysilane (TMOS).

Le rapport molaire du précurseur de silice sur l'agent porogène peut varier en fonction de la taille des pores, du volume poreux et/ou de la surface spécifique que l'on souhaite obtenir. De préférence, il est compris entre 50 et 200, notamment entre 50 et 100.

L'étape a₂) peut être réalisée jusqu'à la formation d'une phase solide dispersée, visible à l'œil nu, correspondant à la formation de particules de silices en suspension résultant de l'hydrolyse et de la condensation du précurseur et se traduisant par une opacification du mélange réactionnel. L'évolution de la turbidité du mélange peut également être suivie en continu par spectrophotométrie, par exemple par turbidimétrie ou opacimétrie.

De façon alternative, l'étape i₂) peut être réalisée jusqu'à l'obtention d'un taux de condensation du précurseur de silice, d'au moins 40%.

Par « taux de condensation du précurseur », on entend le rapport molaire du nombre de liaisons condensées sur le nombre de liaisons condensables. Ce taux de condensation peut être suivi et calculé par RMN.

De façon classique, l'étape a₂) est réalisée pendant une durée tᵢ₂ comprise entre 1 et 3 heures.

L'étape b) comprend l'élimination de l'agent porogène de la structure condensée obtenue.

Cette élimination est de préférence réalisée par extraction de l'agent porogène par calcination.

Contrairement aux méthodes d'extraction par voie chimique, l'extraction par calcination permet d'avoir un taux de condensation de la silice très élevé (proche de 100%) ce qui favorise la stabilité de la silice en milieu aqueux.

La fonctionnalisation des groupes silanols du matériau mésoporeux est réalisée en greffant de manière covalente, un ligand (L) comprenant, à au moins l'une de ses extrémités, un groupement zwitterionique de fomule (I).

Le ligand (L) peut notamment comprendre un groupe zwitterionique de formule (la) ou (Ib) :

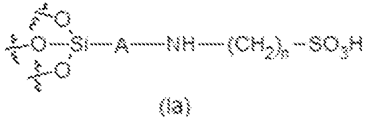

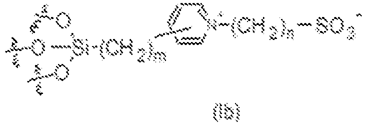

Dans lesquelles :
m est un entier égal à 0, 1 ou 2, de préférence égal à 0 ou 2 et
A désigne un groupe alkylène en C₃ ou aminoalkylène (-NH-Alk-) en C₅ ou C6.

Dans la formule (Ib), l'atome d'azote du groupement pyridinium est de préférence situé en ortho ou para du groupement silylé (-(CH₂)ₘ-Si≡)

Dans les formules (la) ou (Ib) ci-dessus, le ligand (L) est à l'une de ses extrémités, fixé de manière covalente aux silanols du matériau mésoporeux via les liaisons siloxanes -Si-O-Si-, tandis que l'autre extrémité comprend un groupe zwitterionique susceptible de complexer des ions métalliques M²⁺, tels que Mn²⁺, Fe²⁺, Co²⁺, Ni²⁺, Cu²⁺, Zn²⁺ ou Fe³⁺ ce qui permet ensuite de synthétiser et/ou de complexer des particules de ferrite superparamagnétiques.

Cette fonctionnalisation à l'étape i) comprend de préférence deux étapes :
i₁) réaction des fonctions silanols du matériau mésoporeux avec un composé de formule (IIa) ou (IIb) : et 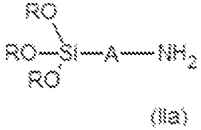 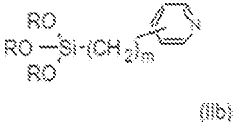 Dans lesquelles :
   R représente, indépendamment, à chaque occurrence, un groupe méthyle ou éthyle ;
   A désigne un groupe alkyle en C₃ ou aminoalkyle en C₅ ou C₆ ;
i₂) réaction de la fonction amine ou pyridine du composé (IIa), (IIb) avec un composé sultone, en particulier la 1,3-propanesultone (PS) ou la 1,4-butanesultone.

Comme exemples de composé de formule (IIa), on peut citer :
- le 3-aminopropyltriethoxysilane (noté APTS ou APTES),
- le (3-aminopropyl)trimethoxysilane (noté APTMS ou APTMES)
- le 3-aminopropyl(diethoxy)methylsilane (appelé aussi 3-(diéthoxymethylsilyl)propylamine et noté APDMES) ,
- le (3-aminopropyl)diméthyléthoxysilane (noté APDMES)
- le (3-aminopropyl)méthyldiéthoxysilane (noté APMDES)
- le N-(2-aminoéthyl)-3-aminopropyltriéthoxysilane (noté AEAPTES),
- le N-(2-aminoéthyl)-3-aminopropyltriméthoxysilane (noté AEAPTMS), ou
- le N-(6-aminohexyl)aminométhyltriéthoxysilane (noté AHAMTES)

Comme exemples de composé de formule (IIb), on peut citer le 2-(4-pyridyléthyl)triéthoxysilane, le 2-(2-pyridyléthyl)triméthoxysilane, le 4-(triéthoxysilyl)pyridine et le 2-(triéthoxysilyl)pyridine

L'étape i₁) peut être réalisée par chauffage, à une température comprise entre 60 °C et 100 °C, dans un solvant organique, comme par exemple le toluène.

L'étape i₂) peut être également réalisée par chauffage, à une température comprise entre 60 °C et 100 °C, dans un solvant organique, comme par exemple le toluène.

### Etape ii)

L'étape ii) correspond à l'incorporation de particules de ferrites superparamagnétiques MFe₂O₄ où M peut être un métal, notamment Mn, Ni, Co, Fe, Cu, Zn (MFe₂O₄NP).

Par « incorporation », on entend, au sens de la présente description, l'incorporation de particules de ferrite déjà formées dans les cavités de la silice mésoporeuse, ou la formation de particules de ferrite in situ à partir d'ions M²⁺ et Fe³⁺au sein des cavités de la silice mésoporeuse.

Selon un mode de réalisation préféré, les particules de ferrite superparamagnétique (MFe₂O₄NP) sont préparées *in situ,* au sein du matériau mésoporeux fonctionnalisé obtenu à l'étape i), à partir de M(II) (avec M = Mn, Ni, Co ,Fe, Cu, Zn) et de Fe(III) comme par exemple dans le cas des particules d'oxyde de fer Fe₃O₄NP.

Les inventeurs ont pu observer que ce mode de réalisation est particulièrement avantageux car la taille des pores du matériau mésoporeux permet de contrôler la croissance des nanoparticules de ferrite, et de limiter notamment la formation d'agrégats : en réduisant la taille des particules de (MFe₂O₄NP), on améliore leur surface spécifique et donc leur pouvoir catalytique. En outre, les ligands zwitterioniques, permettent de fixer et de retenir ces nanoparticules principalement à l'intérieur des pores. En conséquence, les particules de ferrite sont moins exposées et donc moins susceptibles d'être dégradées par le milieu environnant, comparativement à la configuration où les nanoparticules d'oxyde de fer seraient uniquement fixées à la surface de la structure mésoporeuse. Ainsi, les propriétés magnétiques du matériaux MPMS sont mieux préservées au cours du temps.

Ces particules de ferrites peuvent être préparées par ajout en deux étapes d'ions M²⁺ et Fe³⁺ dans une suspension contenant la silice mésoporeuse zwitterionique en milieu ammoniacal, à un pH typiquement compris entre 10 et 11.

Les particules de ferrite, notamment d'oxyde de fer superparamagnétiques, ont une taille généralement comprise entre 2 et 10 nm.

### [Matériaux (MPMS)]

Selon un deuxième aspect, l'invention concerne un matériau à base de silice magnétique mésoporeuse (MPMS) susceptible d'être obtenu selon le procédé selon l'invention.

Selon encore un autre aspect, l'invention concerne un matériau à base de silice magnétique mésoporeuse (MPMS), caractérisé en ce qu'il comprend :
- au moins un ligands (L) comprenant un groupe zwitterionique de formule (I), ledit ligand (L) étant greffé de manière covalente sur des groupes silanols d'un matériau mésoporeux à base de silice ; et
- au moins une nanoparticule de ferrite superparamagnétiques (MFe₂O₄NPs).

Avantageusement, les caractéristiques de ces matériaux, telles que la fonctionnalisation, la teneur en nanoparticules de ferrite, la porosité, le volume poreux et/ou la surface spécifique peuvent être modulées en fonction de la molécule cible que l'on souhaite dégrader et/ou du milieu dans lequel elle se trouve, en jouant notamment sur les conditions de synthèse du procédé selon l'invention.

Le pourcentage massique des nanoparticules d'oxyde de fer par rapport à la silice peut être notamment compris entre 50% et 80%. Ce taux peut par exemple être déterminé par microscopie électronique à balayage, par analyse thermogravimétrique, ou par analyse ICP (spectrométrie à plasma à couplage inductif).

La surface spécifique S_{BET} du matériau (MPMS) mesurée selon la méthode BET, peut être comprise entre 300 et 500 m²/g.

Le volume poreux du matériau (MPMS) peut être compris entre 0,5 et 0,7 mL/g. Il peut être déterminé par physisorption d'azote à 77K (Micromeritics ASAP 2020, USA).

Le diamètre moyen des pores du matériau (MPMS) peut être compris entre 5 nm et 10 nm. Ce diamètre peut être mesuré selon des méthodes bien connues dans le domaine des matériaux mésoporeux, notamment par physisorption d'azote.

### [Utilisation des matériaux (MPMS)]

Selon encore un autre aspect, l'invention concerne l'utilisation d'un matériau à base de silice magnétique mésoporeuse (MPMS) pour la dépollution de l'eau, notamment pour dégrader des composés organiques aromatiques tels que les perturbateurs endocriniens, comme les bisphénols, ou des composés pharmaceutiques.

Plus particulièrement, le matériau peut être utilisé en présence d'H₂O₂ et d'une agitation notamment par ultrasons, de préférence à haute fréquence.

### Exemples

### Exemple : préparation d'un matériau MPMS-Fe₃O₄ NP

### Etape 1 : Synthèse de silice SBA15 avec des pores de 10 nm

1,5 g de copolymère P123 (Aldrich, France) sont dissous dans 40 mL d'HCl 2 mol/L par agitation mécanique à 40°C pendant 2h.

3,12 g de TEOS (Aldrich, France) sont ajoutés goutte à goutte à la solution sous agitation mécanique. La solution est portée à 130°C dans un autoclave pendant 24h.

Le pH du mélange est remonté à pH 7 par ajout d'hydroxyde de sodium (NaOH, 1 mol/L). La suspension est ensuite lavée plusieurs fois par des cycles de centrifugation/redispersion jusqu'à ce que la conductivité de la suspension soit proche de celle de l'eau pure (conductivité < 10 µS/cm).

### Etape 2 : Greffage du 2-(4-pyridyl)éthyltriéthoxysilane sur la silice SBA15 : SBA15-pyr

500 mg de SBA15 sont dispersés dans 25 mL de toluène anhydre. 5,437 mL de 2-(4-pyridyl)éthyltriéthoxysilane (Gelest, USA) sont rajoutés dans le mélange. L'ensemble est chauffé à reflux à 80°C pendant 24h. La poudre est lavée par 3 cycles de centrifugation/redispersion dans de l'éthanol. Le produit est ensuite séché à l'étuve à 60°C pendant 24h.

### Etape 3 : Synthèse du zwitterion sur la silice SBA15 : SBA15-pyr-sult

500 mg de *SBA15-pyr* sont dispersés dans 50 mL de toluène anhydre. 2,612 g de 1,3-propanesultone (Aldrich, France) sont ajoutés dans le mélange. L'ensemble est chauffé à reflux à 60°C pendant 6h. La poudre est lavée par 3 cycles de centrifugation/redispersion dans de l'éthanol. Le produit est ensuite séché à température ambiante pendant 24h.

### Etape 4 : Adsorption d'ions Fe²⁺ sur SBA15-pyr-sult : SBA15-pyr-sult-Fe²⁺

500 mg de *SBA15-pyr-sult* sont dispersés dans 50 mL d'eau déionisée et 0,375g de sel de Mohr Fe(SO₄)₂(NH₄)₂, 6H₂O (Aldrich, France) sont ajoutés. La suspension est agitée pendant 12h à température ambiante. La suspension est ensuite centrifugée une fois et la poudre est séchée à l'étuve 60°C pendant 1 nuit.

### Etape 5 : Préparation de SBA15-pyr-sult-Fe3O4

500 mg de SBA15-pyr-sult-Fe²⁺ sont dispersés dans 150 mL d'eau déionisée à 80°C et 0,750 g de FeCl₃,6H₂O (Aldrich, France) sont ajoutés au mélange. Le pH de la suspension est ajusté à pH compris entre 10 et 11 par ajout de 10 mL d'ammoniaque (NH₄OH, 2mol/L) pendant 2h. Le solide est séparé du liquide à l'aide d'un aimant et est lavé avec de l'eau puis avec de l'éthanol 4 fois puis est séché à 80°C pendant une nuit.

## Revendications

1. Procédé de préparation d'un matériau mésoporeux magnétique à base de silice (MPMS), ledit procédé comprenant les étapes de :
i) Fonctionnalisation des groupes silanols (-SiOH) d'un matériau mésoporeux à base de silice par greffage covalent d'un ligand (L) comprenant, à au moins l'une extrémité, un groupe zwitterionique de formule (I), notamment susceptible de complexer des particules superparamagnétiques : 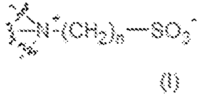 où n est un entier égal à 3 ou 4 ;
ii) Incorporation de particules de ferrites superparamagnétiques (MFe₂O₄NP avec M un métal) au sein du matériau mésoporeux, ce par quoi on obtient un matériau mésoporeux magnétique à base de silice (MPMS).

2. Procédé selon la revendication 1, dans lequel le matériau mésoporeux est matériau de type SBA-15 ou SBA-16, de préférence de type SBA-15.

3. Procédé selon l'une quelconque des revendications précédentes, dans lequel le ligand (L) comprend un groupe zwitterionique de formule (la) ou (Ib) : 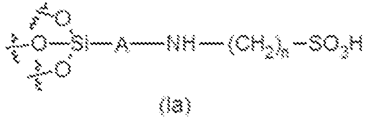 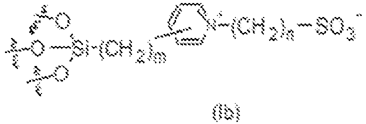 Dans lesquelles :
m est un entier égal à 0, 1 ou 2, et
A désigne un groupe alkylène en C₃ ou aminoalkylène (-NH-Alk-) en C₅ ou C₆.

4. Procédé selon l'une quelconque des revendications précédentes, dans lequel l'étape i) comprend les étapes suivantes :
i₁) réaction des fonctions silanols du matériau mésoporeux avec un composé de formule (IIa) ou (IIb) : et 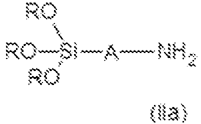 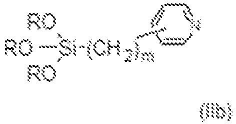 Dans lesquelles :
R représente, indépendamment, à chaque occurrence, un groupe méthyle ou éthyle ;
m étant égal à 0, 1 ou 2 ;
i₂) réaction de la fonction amine ou pyridine du composé (IIa) ou (IIb) avec un composé sultone, en particulier la 1,3-propanesultone (PS) ou la 1,4-butanesultone.

5. Procédé selon l'une quelconque des revendications précédentes, dans lequel à l'étape ii) les particules de ferrites superparamagnétique (MFe₂O₄NP avec M un métal) sont préparées *in situ,* au sein du matériau mésoporeux fonctionnalisé, à partir d'ions M²⁺, notamment Fe²⁺, Co²⁺, Ni²⁺, Mn²⁺, Cu²⁺, Zn²⁺, et Fe³⁺.

6. Procédé selon la revendication 5, dans lequel les ferrites (MFe₂O₄NP avec M un métal) sont préparées par réaction d'ions M²⁺ et Fe³⁺ en présence d'ammoniaque, de préférence à une température de 90 °C.

7. Procédé selon l'une quelconque des revendications précédentes, dans lequel les particules de ferrite superparamagnétiques ont une taille comprise entre 5 nm et 10 nm.

8. Matériau à base de silice magnétique mésoporeuse (MPMS) susceptible d'être obtenu selon le procédé tel que défini selon l'une quelconque des revendications 1 à 7.

9. Matériau à base de silice magnétique mésoporeuse (MPMS), caractérisé en qu'il comprend :
- au moins un ligand (L) comprenant un groupe zwitterionique de formule (I) tel que défini dans les revendications 1 à 7, ledit ligand (L) étant greffé de manière covalente sur des groupes silanols d'un matériau mésoporeux à base de silice ; et
- au moins une nanoparticule de ferrite superparamagnétique (MFe₂O₄NPs avec M un métal).

10. Utilisation d'un matériau mésoporeux magnétique à base de silice (MPMS) selon la revendication 8 ou 9 pour la dépollution de l'eau, notamment pour dégrader des composés organiques aromatiques tels que les perturbateurs endocriniens ou des composés pharmaceutiques.

11. Utilisation selon la revendication 10, dans laquelle le matériau est utilisé en présence d'H₂O₂ et d'une agitation notamment par ultrasons, de préférence à haute fréquence.

## Patentansprüche

1. Verfahren zur Herstellung eines magnetischen mesoporösen Materials auf Siliciumdioxidbasis (MMS), wobei das Verfahren die folgenden Schritte umfasst:
i) Funktionalisieren der Silanolgruppen (-SiOH) eines mesoporösen Materials auf Siliciumdioxidbasis durch kovalente Anbindung eines Liganden (L), der an mindestens einem Ende eine zwitterionische Gruppe der Formel (I) aufweist, die insbesondere supermagnetische Partikel komplexieren kann: 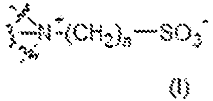 wobei n eine ganze Zahl gleich 3 oder 4 ist;
ii) Einbauen superparamagnetischer Ferritpartikel (MFe₂O₄NP mit M als Metall) in das mesoporöse Material, wodurch ein magnetisches mesoporöses Material auf Siliciumdioxidbasis (MPMS) erhalten wird.

2. Verfahren nach Anspruch 1, wobei das mesoporöse Material ein Material vom Typ SBA-15 oder SBA-16, vorzugsweise vom Typ SBA-15, ist.

3. Verfahren nach einem der vorhergehenden Ansprüche, wobei der Ligand (L) eine zwitterionische Gruppe der Formel (la) oder (Ib) umfasst: 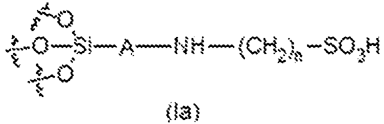 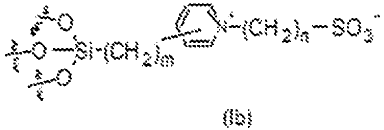 wobei:
m eine ganze Zahl gleich 0, 1 oder 2 ist und
A eine Alkylengruppe mit C₃ oder eine Aminoalkylengruppe (-NH-Alk-) mit C₅ oder C₆ bezeichnet

4. Verfahren nach einem der vorhergehenden Ansprüche, wobei Schritt i) die folgenden Schritte umfasst:
i₁) Reagieren der Silanolgruppen des mesoporösen Materials mit einer Verbindung der Formel (IIa) oder (IIb): und 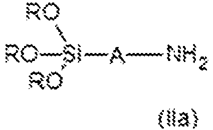 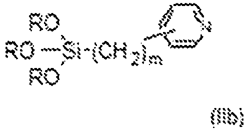 wobei:
R unabhängig bei jedem Auftreten eine Methyl- oder Ethylgruppe darstellt;
m gleich 0, 1 oder 2 ist;
i₂) Reagieren der Amin- oder Pyridinfunktion der Verbindung (IIa) oder (IIb) mit einer Sultonverbindung, insbesondere 1,3-Propansulton (PS) oder 1,4-Butansulton.

5. Verfahren nach einem der vorhergehenden Ansprüche, wobei in Schritt ii) die superparamagnetischen Ferritpartikel (MFe₂O₄NP mit M als Metall) *in situ* innerhalb des funktionalisierten mesoporösen Materials, ausgehend von M²⁺-Ionen, insbesondere Fe²⁺, Co²⁺, Ni²⁺, Mn²⁺, Cu²⁺, Zn²⁺ und Fe³⁺, hergestellt werden

6. Verfahren nach Anspruch 5, wobei die Ferrite (MFe₂O₄NP mit M als Metall) durch Reaktion von M²⁺- und Fe³⁺-Ionen in Gegenwart von Ammoniak, vorzugsweise bei einer Temperatur von 90 °C, hergestellt werden.

7. Verfahren nach einem der vorhergehenden Ansprüche, wobei die superparamagnetischen Ferritpartikel eine Größe im Bereich zwischen 5 nm und 10 nm aufweisen.

8. Magnetisches mesoporöses Material auf Siliciumdioxidbasis (MPMS), das nach dem Verfahren nach einem der Ansprüche 1 bis 7 erhalten werden kann.

9. Magnetisches mesoporöses Material auf Siliciumdioxidbasis (MPMS), **dadurch gekennzeichnet, dass** es Folgendes umfasst:
- mindestens einen Liganden (L) mit einer zwitterionischen Gruppe der Formel (1) gemäß den Ansprüchen 1 bis 7, wobei dieser Ligand (L) kovalent an Silanolgruppen eines mesoporösen Materials auf Siliciumdioxidbasis gebunden ist; und
- mindestens einen superparamagnetischen Ferrit-Nanopartikel (MFe₂O₄NPs mit M als Metall).

10. Verwendung eines magnetischen mesoporösen Materials auf Siliciumdioxidbasis (MPMS) nach Anspruch 8 oder 9 zur Wasseraufbereitung, insbesondere zum Abbau aromatischer organischer Verbindungen wie endokriner Disruptoren oder pharmazeutischer Wirkstoffe.

11. Verwendung nach Anspruch 10, wobei das Material in Gegenwart von H₂O₂ und unter Rühren, insbesondere mittels Ultraschall, vorzugsweise mit hoher Frequenz, verwendet wird.

## Claims

1. A method for preparing a magnetic mesoporous silica-based (MMPS) material, said method comprising the steps of:
i) Functionalising silanol groups (-SiOH) of a mesoporous silica-based material via covalent grafting of a ligand (L) comprising, at least at one end thereof, a zwitterionic group of formula (I), able in particular to complex superparamagnetic particles: 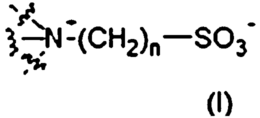 where n is an integer of 3 or 4;
ii) Incorporating superparamagnetic ferrite particles (MFe₂O₄NP with M a metal) in the mesoporous material, whereby a magnetic mesoporous silica-based (MMPS) material is obtained.

2. The method according to claim 1, wherein the mesoporous material is material of SBA-15 or SBA-16 type, preferably of SBA-15 type.

3. The method according to any of the preceding claims, wherein the ligand (L) comprises a zwitterionic group of formula (Ia) or (Ib): 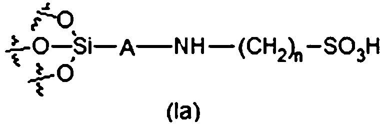 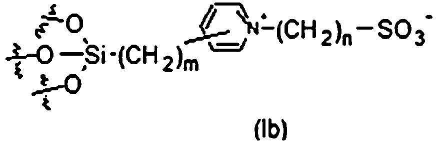 where:
m is an integer of 0, 1 or 2, and
A designates a C₃ alkylene group, or C₅ or C₆ aminoalkylene group (-NH-Alk-).

4. The method according to any of the preceding claims, wherein step i) comprises the following steps:
i₁) reaction of the silanol functions of the mesoporous material with a compound of formula (IIa) or (IIb): 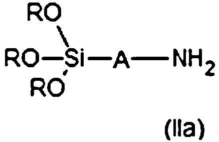 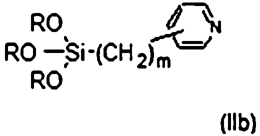 where:
R, on each occurrence, is independently a methyl or ethyl group,
m being 0, 1 or 2;
i₂) reaction of the amine or pyridine function of compound (IIa) or (IIb) with a sultone compound, in particular 1,3-propanesultone (PS) or 1,4-butanesultone.

5. The method according to any of the preceding claims, wherein at step ii) the superparamagnetic ferrite particles (MFe₂O₄NP with M a metal) are prepared *in situ* in the functionalised mesoporous material from M²⁺ ions, in particular Fe²⁺, Co²⁺, Ni, Mn²⁺, Cu²⁺, Zn²⁺ and Fe³⁺.

6. The method according to claim 5, wherein the ferrites (MFe₂O₄NP with M a metal) are prepared by reaction of M²⁺ and Fe³⁺ ions in the presence of ammonia, preferably at a temperature of 90 °C.

7. The method according to any of the preceding claims, wherein the superparamagnetic ferrite particles have a size of between 5 nm and 10 nm.

8. A magnetic mesoporous silica-based (MMPS) material able to be obtained with the method as defined in any of claims 1 to 7.

9. A magnetic mesoporous silica-based (MMPS) material **characterised in that** it comprises:
- at least one ligand (L) comprising a zwitterionic group of formula (I) as defined in claims 1 to 7, said ligand (L) being covalently grafted onto silanol groups of a mesoporous silica-based material; and
- at least one superparamagnetic ferrite nanoparticle (MFe₂O₄NPs with M a metal).

10. Use of a magnetic mesoporous silica-based (MMPS) material according to claim 8 or 9 for the decontamination of water, in particular for the degradation of aromatic organic compounds such as endocrine disruptors, or pharmaceutical compounds.

11. The use according to claim 10, wherein the material is used in the presence of H₂O₂ and under agitation, ultrasound in particular and preferably at high frequency.
